# EUROPÄISCHE PATENTSCHRIFT

(11) **EP 2 620 393 B1**
(45) Veröffentlichungstag und Bekanntmachung des Hinweises auf die Patenterteilung: **22.06.2016**
(21) Anmeldenummer: 13002180.1
(22) Anmeldetag: 07.05.2010
(51) Int. Cl.: B65G 15/02, B65G 21/20, B65G 15/60

(54) **Fördereinrichtung**
Conveyor device
Dispositif de convoyage

(30) Priorität: 25.06.2009 CH 993092009
(43) Veröffentlichungstag der Anmeldung: 31.07.2013
(62) Teilanmeldung aus: 10718426.9
(73) Patentinhaber: WRH Walter Reist Holding AG, 8272 Ermatingen (CH)
(72) Erfinder: Reist, Walter, 8340 Hinwil (CH)
(74) Vertreter: Frei Patent Attorneys

(56) Entgegenhaltungen:
- EP-A1- 0 716 034
- WO-A2-2005/113391
- FR-A1- 2 309 433
- US-A1- 2008 164 124

## Beschreibung

Die Erfindung bezieht sich auf das Gebiet der Fördertechnik. Sie bezieht sich auf eine Fördereinrichtung gemäss dem Oberbegriff der entsprechenden unabhängigen Patentansprüche.

### STAND DER TECHNIK

Es ist bekannt, Fördergut als Stückgut, z. B. Waren, Personen oder Tiere, oder als Schüttgut in Fördereinrichtungen mit flächig ausgedehnten Fördermitteln zu fördern. Solche Fördermittel sind entweder Förderbänder, oder weisen verkettete, typischerweise starre Elemente auf, welche bezüglich zueinander verschiebbar sind, um Kurven fahren zu können. Die Elemente bilden eine im Wesentlichen flache Oberfläche, auf welcher das Fördergut gefördert wird. Diese verketteten Fördermittel sind beispielsweise als Mattenketten, Scharnierbandketten, Plattenbandketten (flexbelts, chain belts, carrier chains) bekannt. Sie werden im Folgenden zusammenfassend als Mattenketten bezeichnet.

Je nach Art der Fördermittel werden diese unterschiedlich gelagert: Mattenketten werden beispielsweise flächig abgestützt und rutschen dabei auf Gleitschienen oder Gleitflächen. Dies führt, in Abhängigkeit der Belastung durch das Fördergut, zu hohen Reibungskräften und entsprechenden Antriebskräften zur Bewegung der Mattenkette, sowie zu Verschleiss. Andere Ausführungsformen von Mattenketten weisen, als Teil der Mattenkette selber, mitlaufende Rollen auf, welche auf einer Fläche rollen. Förderbänder hingegen rollen in der Regel auf feststehenden, d.h. ortsfest drehbar gelagerten Rollen ab. Die drehbare Lagerung der Rollen führt zu Verschleiss und begrenzt die Belastbarkeit einer Fördereinrichtung.

Die FR 2 309 433 beschreibt im Weiteren eine Fördereinrichtung zum Fördern von Stückgut gemäß dem Oberbegriff des Anspruchs 1. Die Fördereinrichtung enthält einen Kettentransporteur aus beweglichen Kettengliedern, welcher angetrieben wird, und auf welchem Güter transportiert werden. Der Kettentransporteur wird durch eine Abstützvorrichtung gestützt. Die Abstützvorrichtung umfasst umlaufende Rollen, welche über seitlich an den Rollen angeordneten Ketten miteinander verbunden sind. Die Rollen sind über Achswellen drehbar an den seitlichen Ketten gehaltert.

Die DE 26 124 68 beschreibt ein Fördereinrichtung mit einem Transportband, welches durch einen Laufrost gestützt ist. Der Laufrost besteht aus zwei parallel laufenden Laufrollenketten, die gemeinsam transversale zylindrische Querstäbe tragen. Die Laufrollenketten enthalten über Gleitlager drehbar gelagerte Laufrollen, über welche der Laufrost abrollt.

Die EP 0 978 465 wiederum beschreibt eine Vorrichtung zum linearen Bewegen von Bauteilen. Die Transportvorrichtung enthält ein Transportband, welches zwischen Schlitten und Rollleisten kraftschlüssig fixiert ist. Die Rollleisten sind auf Wälzkörpem gelagert.

Alle bekannten Vorrichtungen weisen den Nachteil auf, dass Sie einen komplizierten Aufbau aufweisen und aus vielen Einzelteilen bestehen. Sie sind daher teuer in ihrer Herstellung und im Unterhalt. Viele Vorrichtungen weisen zudem mechanische Lager mit Wellen, Wälzlagern etc. auf, welche die Vorrichtung anfällig auf Störungen und Verschleiss macht.

WO 2005/113391 zeigt ein Rollenelement mit einem Zentralkörper sowie einen Rollenkörper. Der Rollenkörper ist auf einer nicht kreisförmigen Umlaufbahn um den Zentralkörper verlaufend und bezüglich des Zentralkörpers durch Abrollen von Rollen des Rollenkörpers an einer Innenseite des Rollenkörpers am Zentralkörper bewegbar angeordnet. In einer Ausführungsform ist die Umlaufbahn und damit auch der Rollenkörper zweifach gekrümmt, und ein Verbindungskörper, welcher den Rollenkörper zusammenhält, ist um zwei Achsen biegbar.

### DARSTELLUNG DER ERFINDUNG

Es ist Aufgabe der Erfindung, eine Fördereinrichtung der eingangs genannten Art zu schaffen, welche eine hohe Belastbarkeit, insbesondere in vertikaler Richtung, und gleichwohl einen leichten, das heisst reibungsarmen Lauf aufweist. Eine weitere Aufgabe ist es, die Zugkraft für den Antrieb der Fördermittel zu reduzieren. Eine weitere Aufgabe der Erfindung ist, den Einsatzbereich für eine solche Fördereinrichtung zu erweitern.

Diese Aufgabe löst eine Fördereinrichtung mit den Merkmalen von Anspruch 1.

Die erfindungsgemässe Fördereinrichtung kann in der Förderung von Schüttgut oder Stückgut, wie ruhendes Gut oder sich selbst bewegbares Gut, insbesondere Personen oder andere Lebewesen, z. B. Tiere, Verwendung finden. Unter den Begriff Stückgut fallen folglich sowohl Waren als auch Lebewesen, wie Personen, Tiere und Pflanzen. Die Fördereinrichtung kann z. B. ein Förderband zur Förderung von ruhenden oder sich selbst bewegenden Gütern, insbesondere von Tieren oder Personen mit und ohne Gepäck sein, wie sie z. B. auf Flughäfen angetroffen werden. Die Förderbänder können in der Ebene oder leicht geneigt verlaufen. Förderbänder zur Förderung von Personen zwecks Überwindung längerer Strecken werden auch Fahrsteige oder Rollsteige genannt. Das Fördermittel kann ein Band oder eine Mattenkette sein. Solche Roll- bzw. Fahrsteige, insbesondere mit Neigung, trifft man z. B. auch in Supermärkten an.

Im Weiteren kann die Fördereinrichtung auch zur Durchführung von Laufbewegungen von Personen oder Tieren Einsatz finden. Unter den Begriff Laufbewegung fällt insbesondere auch die Gehbewegung. So kann die Fördereinrichtung z. B. eine Laufbandvorrichtung zu Trainings-, Therapie- und/oder Untersuchungszwecken der Laufbewegung von Menschen oder Tieren sein. Bei solchen Laufbandvorrichtungen bewegt sich das Fördermittel unter dem Benutzer, so dass dieser dazu animiert wird, entgegen der Förderrichtung auf dem Fördermittel eine Laufbewegung auszuführen. Auf diese Art führt der Benutzer eine Laufbewegung aus, ohne sich in nennenswerter Weise räumlich fortzubewegen. Durch die faktisch ortsfeste Laufbewegung des Benutzers auf der Laufbandvorrichtung ist einerseits eine gute Beobachtbarkeit durch einen Trainer oder Mediziner gegeben, und andererseits ist zur Ausübung der Laufbewegung keine komplette Laufbahn mit entsprechendem Platzaufwand notwenig ist. Der Begriff "Band" soll in diesem Zusammenhang ebenfalls sämtliche eingangs und unten genannten Ausführungsformen von flächigen Fördermitteln, wie Bänder oder Mattenketten, umfassen.

In der **Fördereinrichtung** befindet sich ein bewegtes, flächig ausgedehntes Fördermittel zur Förderung von Schüttgut oder Stückgut, wie Waren oder Lebewesen, z. B. Personen oder Tiere, vor. Hierzu sind unter dem Fördermittel eine oder mehrere Abstützvorrichtungen angeordnet, welche jeweils einen Rollenkörper mit einer Vielzahl von Rollen aufweist. Dabei rollt der Rollenkörper auf einer Seite mit den Rollen entlang einer nicht kreisförmigen Bahn am Stützkörper ab und stützt auf der anderen Seite in einem Unterstützungsbereich das Fördermittel, indem die Rollen am Fördermittel selber oder an einem zwischen Fördermittel und Rollen mitlaufenden Band abrollen (das Band wird als Teil des Rollenkörpers betrachtet). Die Rollen sind mit einem flexiblen Verbindungskörper miteinander verbunden und voneinander beabstandet sind. Der Stützkörper enthält zweckmässig einen Zentralkörper, entlang welchem der Rollenkörper abrollt sowie jeweils einen seitlich am Zentralkörper angebrachten Seitenwandkörper, über welchen die Abstützvorrichtung einer Unterlage aufliegt.

Das Fördermittel ist vorzugsweise eine Mattenkette (respektive Scharnierbandkette, Plattenbandkette, etc.) oder ein Förderband. Die Lager- bzw. Halterungspunkte der Rollen, über welche die Rollen mit dem Verbindungskörper verbunden und geführt sind, nehmen dabei keine Kräfte zum Stützen des Fördermittels und des Fördergutes auf. Damit ist das Stützen des Fördermittels mit sehr geringen Reibungsverlusten möglich. Der Verbindungskörper dient zum Fördern und Beabstanden der Rollen in den unbelasteten Bereichen der Umlaufbahn um den Stützkörper oder der Bahn entlang des Stützkörpers. Entsprechend der geringen Reibung und der rollend gelagerten Bewegung des Fördermittels sind auch der Verschleiss und die Antriebskräfte zum Bewegen des Fördermittels klein. Es werden weniger Antriebsmotoren und/oder weniger leistungsfähige Antriebsmotoren benötigt.

Vorzugsweise sind die Rollen um den Stützkörper herum umlaufend angeordnet, insbesondere in einem geschlossenen Kreislauf, auch Umlaufbahn genannt, umlaufend. In anderen Ausführungsformen der Erfindung liegt kein geschlossener Kreislauf vor, sondern beispielsweise eine gerade verlaufende Bahn. Ein Unterstützungsbereich, in welchem das Fördermittel am Rollenkörper abrollt, ist in beiden Fällen vorzugsweise plan, also nicht gekrümmt. Dabei kann der Unterstützungsbereich horizontal oder auch schräg, verlaufen, d.h. zur Aufwärts- oder Abwärtsförderung des Fördergutes.

In bevorzugten Ausführungsformen liegt ein Unterstützungsbereich nur an einzelnen Stellen entlang des Fördermittels vor, zweckmässigerweise an Stellen mit erhöhter Last, beispielsweise Stellen, an welchen Fördergut gestaut wird. An anderen Stellen entlang des Fördermittels kann eine konventionelle Stützung, beispielsweise mit Gleitbahnen, erfolgen.

Es kann also eine im Wesentlichen beliebig lange flache Förderstrecke mit einem entsprechend langen Rollenkörper und Stützkörper gestützt werden. Vorzugsweise erstreckt sich der Rollenkörper im Wesentlichen über die ganze Breite des Fördermittels, also beispielsweise über mehr als 3/4 oder 4/5 der Breite. Dadurch ist das Fördermittel an den meisten Stellen (im Querschnitt gesehen) gestützt und kann selber relativ leicht konstruiert werden.

In einer weiteren bevorzugten Ausführungsform der Erfindung liegen mehrere Rollenkörper vor, welche gemeinsam das Fördermittel stützen. Die mehreren Rollenkörper sind (bis auf die Kopplung über das Fördermittel) separat voneinander beweglich. Sie weisen jeweils einen eigenen Stützkörper oder aber einen oder mehrere gemeinsame Stützkörper für mehrere oder alle der Rollenkörper auf. Die Rollenkörper sind, in Förderrichtung gesehen, hintereinander und/oder nebeneinander zum Stützen des Fördermittels angeordnet. Die Abstützvorrichtungen können direkt aneinander liegend und/oder voneinander beabstandet hinter- und/oder nebeneinander angeordnet sein. Die Abstützvorrichtungen können gleichgerichtet nebeneinander in Reihen oder versetzt nebeneinander angeordnet sein. Ferner können die Abstützvorrichtungen gleichgerichtet in Kolonnen oder versetzt hintereinander angeordnet sein. In einer bevorzugten Ausführung sind die Abstützvorrichtungen jeweils versetzt zueinander ziegelsteinmauerartig angeordnet. Die Abstützvorrichtungen bilden auf diese Weise einen flächigen Stützbereich für das Fördermittel aus. Wenn sie in mehreren Reihen nebeneinander angeordnet sind, so können die Rollenkörper in den einzelnen Reihen, in Förderrichtung gesehen, gegeneinander versetzt sein, und/oder unterschiedliche Längen aufweisen. Damit lässt sich erreichen, dass Übergangsbereiche zwischen aufeinander folgenden Rollenkörpem (im Unterstützungsbereich) unregelmässig verteilt sind und somit alle Bereiche des Fördermittels gleichmässig unterstützt werden.

In einer bevorzugten Ausführungsform der Erfindung weist der Rollenkörper ein Band auf, welches die Rollen bedeckt und umschliesst, so dass das Fördermittel über das Band an den Rollen abrollt. Das Fördermittel rollt also auf dem Band liegend an den Rollen ab. Dies ist besonders zweckmässig in Kombination mit einer Mattenkette: im Gegensatz zu einem Förderband weist eine Mattenkette Öffnungen auf, welche ihre Beweglichkeit ermöglichen, aber auch ein Herabfallen von Schmutz in den Rollenkörper zulassen. Dem wird durch das Band entgegen gewirkt.

Gemäss der Erfindung verläuft das Fördermittel in einer Kurve um eine Kurvenachse, die im wesentlichen senkrecht zur Oberfläche des Fördermittels liegt. Das Fördermittel ist im Bereich der Kurve abgestützt durch mindestens einen Rollenkörper mit einem Verbindungskörper, wobei der Verbindungskörper um die Kurvenachse biegbar angeordnet ist. Das Fördermittel rollt im Bereich der Kurve auf dem ebenfalls um die Kurve verlaufenden Abschnitt des Rollenkörpers ab. Eine Umlaufbahn, um welche der Rollenkörper um den Stützkörper verläuft, ist also gekrümmt um die Kurvenachse, welche senkrecht zu den Achsen der Rollen verläuft. Mit anderen Worten: Die Bahn läuft aus der Ebene, welche normal zu den Rollenachsen in einem bestimmten Punkt am Rollenkörper verläuft, heraus. Vorzugsweise liegen dabei in einer konzentrischen Anordnung mehrere Rollenkörper vor, und sind die Umlaufbahnen der mehreren Rollenkörper alle um die Kurvenachse gekrümmt.

In einer Ausführungsform weist das Fördermittel einen wannenartigen Querschnitt auf, mit einem horizontalen Bodenbereich, und zwei an den Bodenbereich anschliessende, seitliche, schräge Seitenbereiche. Dabei ist das Fördermittel an den Seitenbereichen durch jeweils weitere Rollenkörper gemäss der Erfindung gestützt. Damit lässt sich eine reibungsarme Stützung eines Fördersystems für Schüttgut bilden. Beispielsweise ist das Fördermittel ein Förderband. Vorzugsweise sind die Seitenbereiche jeweils um einen Winkel zwischen 30° und 60° bezüglich des Bodenbereiches angewinkelt.

In einer weiteren bevorzugten Ausführungsform der Erfindung ist oberhalb des Fördermittels mindestens ein Führungselement mit einem Rollenkörper zur seitlichen Führung und Umlenkung von Fördergut angeordnet. Dieses Führungselement erlaubt eine reibungsarme Umlenkung des Fördergutes. Ein solches Führungselement kann auch bei anders abgestützten Fördermitteln eingesetzt werden, beispielsweise bei konventionellen Bandförderern oder Mattenketten, unabhängig von den anderen Aspekten der Erfindung. Vorzugsweise weist der Rollenkörper des Führungselementes ein umlaufendes Band zum Schutz des Rollenkörpers vor Beschädigung oder Verschmutzung auf.

In einer weiteren bevorzugten Ausführungsform der Erfindung bilden die Rollenkörper keinen geschlossenen Kreislauf. Hierdurch kann auch das Fördermittel zur Ausführung von hin- und hergehenden Bewegungen ausgebildet werden. Beispielsweise kann ein flacher Rollenkörper auf einer flachen Unterlage, welche als Stützkörper dient, angeordnet sein, und dadurch einen beweglichen Rollenteppich für eine als Fördermittel dienenden flache Platte bilden. Natürlich muss dabei berücksichtigt werden, dass beim Abrollen der Platte der Rollenteppich sich nur um die halbe Distanz bewegt. Somit muss für eine Linearbewegung maximal um eine bestimmte Distanz eine Länge des Rollenteppichs und der Fördervorrichtung entsprechend angepasst sein.

Der Rollenkörper kann ein flächenförmiger Verbund von in einem flächenförmig ausgebildeten Verbindungskörper gehalterten Rollen sein, die sowohl neben- als auch hintereinander angeordnet sind. Die Rollen können versetzt oder jeweils koaxial in Reihen nebeneinander angeordnet sein. Ferner können die Rollen versetzt oder gleichgerichtet in Kolonnen hintereinander angeordnet sein. Beliebige Kombinationen von Anordnungen der Rollen neben- und hintereinander sind denkbar. Durch die sowohl neben- als auch hintereinander angeordneten Rollen wird eine Art Rollenteppich ausgebildet, welche durch den flächigen Verbindungskörper zusammengehalten wird, und welche die grossflächige Abstützung eines flächigen Fördermittels erlaubt. Der Verbindungskörper kann ein- oder mehrstückig ausgebildet sein.

Gemäss einer Ausführungsform sind in der **Abstützvorrichtung** für eine Fördereinrichtung die Rollen im Rollenkörper respektive im Verbindungskörper in einer Vielzahl von aufeinander folgenden Reihen mit mehreren koaxial angeordneten Rollen pro Reihe angeordnet. Damit ist eine stützende bewegliche Lagerung eines breiten Fördermittels möglich. Diese Anordnung der Rollen kann auch beweglicher Rollenteppich genannt werden. Sie kann zudem auch unabhängig von einer Fördereinrichtung wie bisher beschrieben eingesetzt werden, um ein grossflächiges Abrollen von Objekten aneinander zu ermöglichen.

Es sind vorzugsweise die Rollen in einer Reihe jeweils gegenüber den Rollen einer vorangehenden respektive einer nachfolgenden Reihe in Achsrichtung versetzt. (Die Achsrichtung ist gleich der geometrischen Achse, um welche die koaxialen Rollen drehend angeordnet sind). Damit kann eine besonders gleichmässige Stützung realisiert weiden. Die nachfolgende Reihe kann dabei eine unmittelbar nachfolgende Reihe sein, oder es können auch einzelne Reihen bezüglich unmittelbar (vorangehend oder nachfolgend) anschliessenden Reihen nicht versetzt sein.

Vorzugsweise sind die Rollen im Rollenkörper in mindestens zwei parallel nebeneinander verlaufenden Kolonnen angeordnet. Verschiedene Kolonnen können dabei Reihen zugeordnet sein, die zueinander versetzt sind.

Der Rollenkörper weist bevorzugt einen flexiblen und flächigen Verbindungskörper auf. Die Flächennormale des flächigen Verbindungskörpers steht zweckmässig senkrecht zu den jeweiligen Drehachsen der Rollen. Die Rollen sind bevorzugt in Öffnungen des Verbindungskörpers eingesetzt. Vorzugsweise ist der Verbindungskörper aus einem flexiblen, vorzugsweise auch elastischen Flachmaterial gefertigt, insbesondere durch Ausschneiden (d.h. durch Stanzen, Wasserstrahlschneiden, Laserschneiden etc). Vorzugsweise werden keine weiteren Bearbeitungsschritte vorgenommen, beispielsweise das Umformen von Teilen des Verbindungskörpers zur Bildung von Lager- bzw. Halterungsstellen am Verbindungskörper.

Das Flachmaterial kann ein textiles Flächengebilde, wie z. B. ein Gewebe, sein oder enthalten. Das Flachmaterial kann auch ein Verbund von textilen Flächengebilden, dünnen Platten und/oder Folien sein oder enthalten. Bevorzugt ist das Flächegebilde ein Kunststoff-Gewebe-Verbund. Das Flachmaterial ist beispielsweise ein kunststoffgetränktes Gewebe mit einer oder mehreren Schichten, oder eine dünne Platte oder Folie aus Kunststoff. Der Verbindungskörper kann auch in einem Batchprozess oder einem kontinuierlichen Prozess bereits mit den Öffnungen gebildet werden.

Die genannten Halterungsstellen am Verbindungskörper bilden zusammen mit den korrespondierenden Aufnahmestellen an den Rollen eine funktionelle Einheit mit lagerähnlicher Funktion aus. Dabei greifen Materialvorsprünge am Verbindungskörper in stirnseitige, muldenförmige Vertiefungen bzw. Einbuchtungen an den Rollen ein, wobei die Vertiefungen zweckmässig axial zentriert sind. Eine solche Halterung ist von der Funktionsweise einem Spitzen- bzw. Körnerlager ähnlich, wobei die Materialvorsprünge am Verbindungskörper den Lagerzapfen und die stirnseitigen Vertiefungen an den Rollen den Lagerflächen entsprechen würden.

Gemäss einer besonderen Ausbildung sind Ausbuchtungen, welche als Lager- bzw. Führungs- und Halterungsstellen für die Rollen dienen, aus dem Flachmaterial des Verbindungskörpers ausgeschnitten oder ausgeformt und weisen folglich dieselbe Dicke auf wie die übrigen Bereiche des Verbindungskörpers. Das heisst, dass beispielsweise runde Aussparungen der Rollen an nicht runden Ausbuchtungen gelagert bzw. gehalten sind. Es entstehen dadurch mehrere quasi punktförmige Kontaktstellen zwischen Rollen und Verbindungskörper, und dadurch eine vorzugsweise lose, reibungsarme Lagerung bzw. Halterung. Die Ausbuchtungen und Aussparungen bilden axial, also parallel zur Achse der Rollen angeordnete Elemente zur Lagerung bzw. zur drehbaren Halterung der Rollen. Die Rollen laufen lose, also mit Spiel und ohne eingeklemmt zu sein in dieser Lagerung bzw. Halterung.

Die Rollen sind vorzugsweise nur im Verbindungskörper gelagert bzw. gehaltert. D.h. die Lagerung bzw. Halterung dient der Führung der Rollen wenn diese auf dem Stützkörper abrollen. Die Lagerung bzw. Halterung dient jedoch nicht der ortsfesten drehbaren Lagerung der Rollen, weil die Rollen im Stützbereich dem Stützkörper aufliegen und daher gar nicht frei drehbar sind. Demzufolge sind auch die Lagerkräfte vernachlässigbar klein. Es liegen daher auch keine zusätzlichen Körper, wie z. B. Wellen, Lagerelemente etc, vor, die zur Lagerung bzw. Halterung bzw. Führung der Rollen am Verbindungskörper befestigt oder angespritzt sind.

Die Rollen sind im Verbindungskörper also zweckmässig in mehreren Reihen angeordnet, wobei eine solche Reihe aus nur einer oder mehreren nebeneinander angeordneten Rollen ausgebildet sein kann. Im ersteren Fall besteht der Verbindungskörper aus genau einer Kolonne von Rollen. Der Verbindungskörper ist vorzugsweise über mehrerer solcher Reihen hin einstückig ausgebildet. Der Verbindungskörper kann auch aus mehreren Schichten von parallel zueinander angeordneten einstückigen Materialien ausgebildet sein. Diese mehreren Schichten, beispielsweise aus dünnem Folienmaterial, können miteinander verbunden, insbesondere flächig verbunden sein, (durch beispielsweise Kleben oder Schweissen) oder lose aufeinander liegen. Bei der Herstellung des Verbindungskörpers können einzelne der Schichten gegeneinander versetzt aufeinander gelegt und dann miteinander verbunden werden. D.h., es werden Überlappungsbereiche ausgebildet, an welchen die einzelnen Schichten miteinander zu einem längeren Stück verbunden sind. Das Verbinden kann beispielsweise durch Verkleben, Nieten oder Verschweissen geschehen. Alternativ können auch Schichten durch die Rollen verbunden respektive zusammengehalten sein, indem bei jeder Rolle ein Lager- bzw. Halterungsvorsprung von zwei oder mehr der aufeinander liegenden, d.h. überlappenden Schichten eingreift. Dadurch können aus begrenzt langen Teilstücken beliebig lange Verbindungskörper gebildet werden, wobei die Übergangsstellen der einzelnen Schichten in Längsrichtung des Verbindungskörpers gegeneinander versetzt sind, d.h. die Teilstücke überlappen sich und werden im Überlappungsbereich durch die Rollen zusammengehalten oder sind miteinander verbunden. Auf gleiche Weise, nämlich auch durch überlappendes Verbinden eines Flachmaterials oder mehrerer Teilstücke eines Flachmaterials, kann ein in sich geschlossener Verbindungskörper ausgebildet werden, welcher zusammen mit den Rollen als Rollenkörper eine Umlaufbahn um den Stützkörper ausbildet. In einer bevorzugten Variante sind zwei oder mehr Schichten durch Bilden einer Schlaufe in einem einstückigen Band und Aufeinanderlegen des Bandes auf sich selber gebildet.

Die Rollen und damit deren Mantelflächen sind bevorzugt zylinderförmig. Die Mantelfläche der Rollen kann jedoch auch leicht oder mässig bombiert sein, d.h. die Rollen sind z. B. tonnenförmig ausgebildet. Ferner kann auch vorgesehen sein, dass die Rollen eine oder mehrere konzentrisch zur Drehachse ringförmig umlaufende Rillen bzw. Nuten aufweist. Die Nuten können Führungsnuten sein, welche in korrespondierenden Führungsstegen bzw. Führungsrücken am Stützkörper laufen.

Weitere bevorzugte Ausführungsformen gehen aus den abhängigen Patentansprüchen hervor.

### KURZE BESCHREIBUNG DER ZEICHNUNGEN

Im Folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: eine Fördereinrichtung mit integrierter Abstützvorrichtung und einem Förderband;
- Figur 2: einen Ausschnitt einer Fördereinrichtung mit integrierter Abstützvorrichtung und einer Mattenkette;
- Figur 3: einen Ausschnitt einer Fördereinrichtung mit integrierter Abstützvorrichtung und einer Mattenkette und einem Band;
- Figur 4: eine Abstützvorrichtung mit einem Stützkörper und einem Rollenkörper;
- Figur 5: einen Querschnitt durch die Figur 4;
- Figur 6: einen Ausschnitt eines Rollenkörpers;
- Figur 7: eine Aufsicht auf einen Kurvenbereich einer Fördereinrichtung gemäß der Erfindung;
- Figur 8: eine Aufsicht auf einen Rollenkörper für eine Kurve;
- Figur 9: eine seitliche Ansicht eines Stützkörpers für eine Kurve;
- Figur 10: mehrere konzentrische Stützkörper für eine Kurve;
- Figur 11: einen Querschnitt durch eine Fördereinrichtung mit seitlich angewinkelten Stützbereichen;
- Figur 12: eine Variante eines Rollenkörpers mit Reihen von in Achsrichtung gegeneinander versetzten Rollen (Ausschnitt);
- Figuren 13 und 14: weitere Varianten des Rollenkörpers (Ausschnitte);
- Figur 15: einen Rollenkörper mit einem Verbindungskörper aus mehreren Schichten;
- Figur 16: einen Rollenkörper mit einem Verbindungskörper aus einem geschlauften Teil; und
- Figur 17: eine Fördereinrichtung mit seitlichen Führungselementen;
- Figur 18a, 18b: eine perspektivische Ansicht von besonderen Ausführungsformen von Rollen eines erfindungsgemässen Rollenkörpers;
- Figur 19: eine perspektivische Ansicht einer weiteren Ausführungsform einer Abstützvorrichtung mit Rollen nach Figur 18b;
- Figur 20a: eine Seitenansicht einer Abstützvorrichtung nach Figur 19;
- Figur 20b: einen Querschnitt durch eine Abstützvorrichtung entlang einer Linie A-A gemäss Figur 20a.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### WEGE ZUR AUSFÜHRUNG DER ERFINDUNG

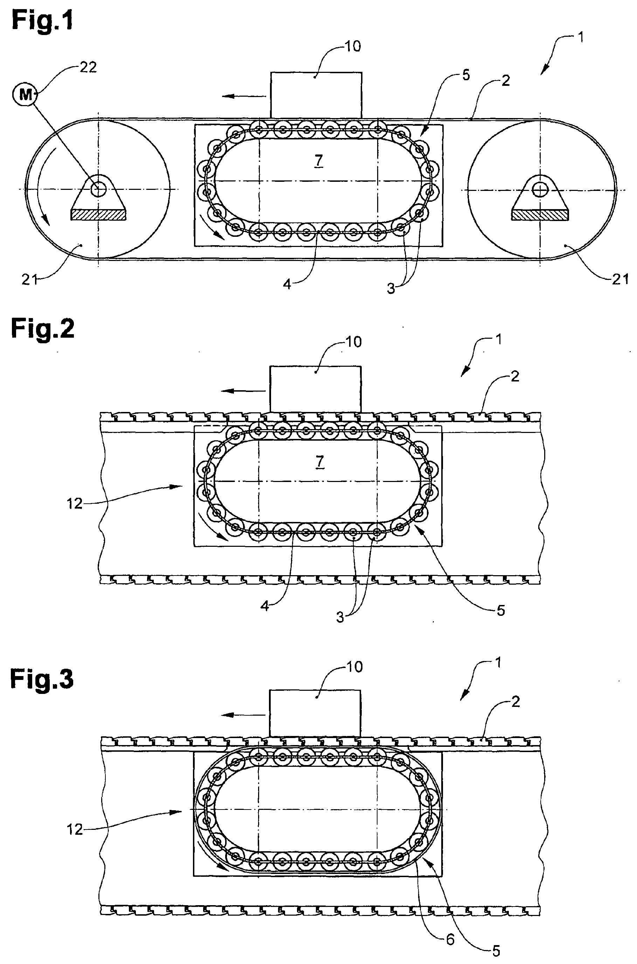

**Figur 1** zeigt eine Fördereinrichtung 1 mit einem Förderband als Fördermittel 2 für Fördergut 10, hier beispielhaft als Stückgut dargestellt. Das Förderband wird um Umlenkrollen 21 geführt, von denen beispielsweise eine durch einen Antrieb 22 angetrieben ist. In einem Unterstützungsbereich ist eine Abstützvorrichtung 12 angeordnet, mit einem Rollenkörper 5, welcher um einen Stützkörper 7 umläuft: Der Rollenkörper 5 weist umlaufende Rollen 3 auf, welche mittels eines Verbindungskörpers 4 voneinander beabstandet sind. Das Fördermittel 2 bewegt sich in einer Förderrichtung bezüglich der Abstützvorrichtung 12. Dabei rollen die Rollen 3 am Fördermittel 2 und am Stützkörper 7 ab. So ermöglicht die Abstützvorrichtung 12 eine hochbelastbare und reibungsarme Abstützung des Fördermittels 2. Das dargestellte Fördergut 10 steht symbolisch für Stückgut, Schüttgut oder auch Lebewesen, wie Personen oder Tiere.

In einer anderen bevorzugten Ausführungsform der Erfindung (nicht illustriert) läuft der Rollenkörper 5 auch um die Umlenkrollen 21 um. Um dabei das Fördermittel 2 anzutreiben, kann ein Antrieb im Rücktrum (also im unteren Bereich des Fördermittels 2) angeordnet sein, und dort nur am Förderband oder einer Mattenkette 2 angreifen. Der Rollenkörper 5 verläuft dort in einem Bereich zwischen Antrieb und Stützkörper 7. In einer anderen Ausführungsform der Erfindung ist der Rollenkörper 5 mehrteilig und weist mehrere nebeneinander verlaufende Verbindungskörper 4 mit Rollen 3 auf. Die Verbindungskörper 4 sind voneinander durch Zwischenräume beabstandet, so dass der Antrieb mittels einer der Umlenkrollen 21 durch die Zwischenräume am Fördermittel 2 angreifen kann.

Vorzugsweise ist der Rollenkörper 5 selber nicht angetrieben, sondern wird nur bei Bewegung des Fördermittels 2 mitbewegt. D.h., der Rollenkörper bzw. die Rollen oder der Verbindungskörper des Rollenkörpers sind ausschliesslich passiv und nicht aktiv angetrieben.

**Figur 2** zeigt einen Ausschnitt einer Fördereinrichtung 1 mit einer Mattenkette als Fördermittel 2. **Figur 3** zeigt einen Ausschnitt einer Fördereinrichtung 1 mit einer Mattenkette und zusätzlich einem Band 6. Das Band 6 schützt den Rollenkörper 5 vor Schmutz, der durch die Mattenkette hindurch fallen kann.

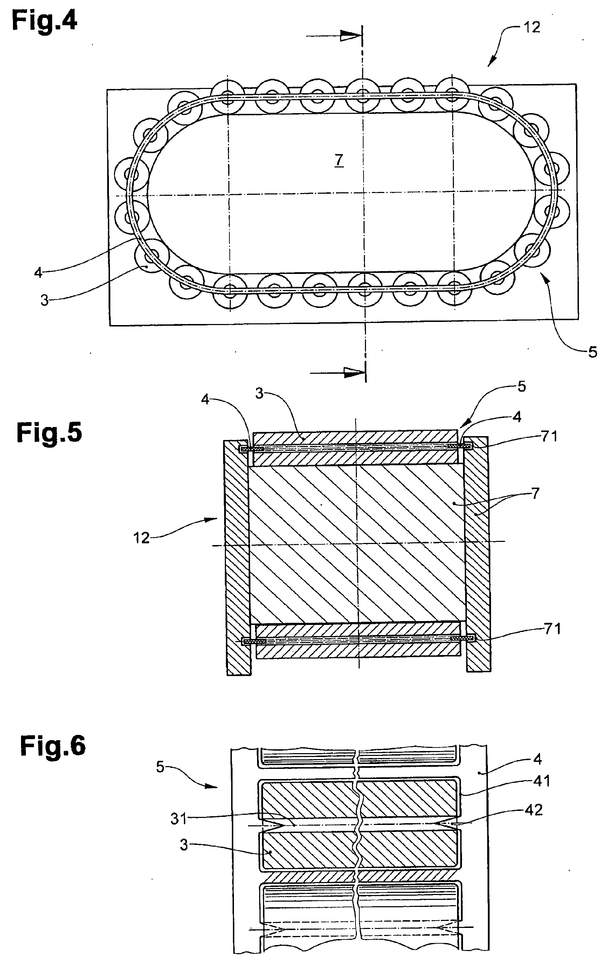

**Figur 4** zeigt einen Stützkörper 7 mit einem Rollenkörper 5 in einer Seitenansicht, und entsprechend **Figur 5** einen Querschnitt durch die Figur 4. Zusätzlich zu den bereits beschriebenen Elementen ist eine Führungsnut 71 zur Führung des Verbindungskörpers 4 im Stützkörper 7 dargestellt.

**Figur 6** zeigt einen Ausschnitt eines Rollenkörpers 5, mit einem Längsschnitt durch eine Rolle 3. Der Verbindungskörper des Verbindungskörpers 4 weist Öffnungen 41 auf, an welchen Lager- bzw. Halterungsstellen 42 ausgebildet sind, mittels welcher die Rollen 3 gelagert bzw. gehaltert und geführt sind. Die Lager- bzw. Halterungsstellen 42 können, wie dargestellt, Ausbuchtungen des Verbindungskörpers 4 sein, welche in korrespondierend geformte Einbuchtungen oder Aussparungen der Rollen 3 eingreifen. Die Aussparungen der Rollen 3 können wie dargestellt als durchgehende Löcher 31 ausgebildet sein, d.h. dass die Rollen 3 als Hülsen oder Rohrstücke geformt sind. Alternativ können die Aussparungen lediglich als rotationssymmetrische Vertiefungen an den Enden der Rollen ausgebildet sein. Vorzugsweise sind die Vertiefungen sich nach innen verjüngend geformt. Dabei sind die Rollen 3 vorzugsweise als (Kunststoff)-Spritzgussteile geformt. Umgekehrt können die Rollen 3 vorstehende Achselemente aufweisen, welche in Öffnungen des Verbindungskörpers 4 einsetzbar sind.

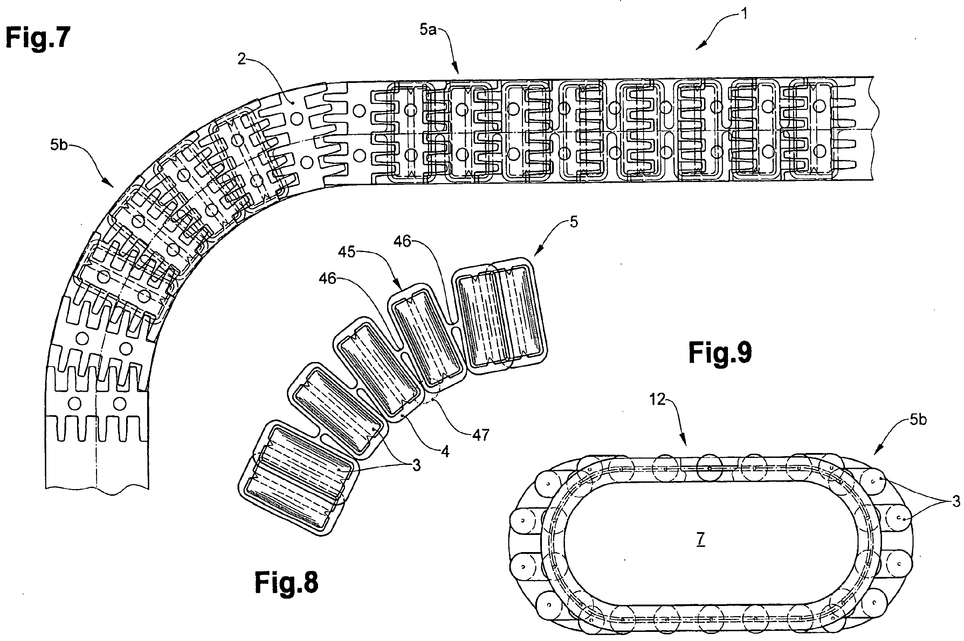

**Figur 7** zeigt eine Aufsicht auf einen Kurvenbereich einer Fördereinrichtung 1 mit einer Mattenkette als Fördermittel 2. Unterhalb des Fördermittels 2 ist ein gerade verlaufender Rollenkörper 5a und ein in einer Kurve verlaufender Rollenkörper 5b gestrichelt dargestellt. **Figur 8** zeigt eine Aufsicht auf einen Rollenkörper 5 für eine Kurve, ohne den dazugehörigen Stützkörper 7. Der Verbindungskörper 4 weist, um die Kurvengängigkeit zur erreichen, Lager- bzw. Halterungsbereiche 45, in welchen die Rollen 3 eingesetzt sind, und Verbindungsstellen 46, welche die Lager- bzw. Halterungsbereiche 45 verbinden, auf. Im gezeigten Beispiel sind die Verbindungsstellen 46 in der Mitte der Verbindungskörper 4 angeordnet, sie können aber auch asymmetrisch oder ganz an einer Seite angeordnet sein (in der Figur dort, wo die Lager- bzw. Halterungsbereiche 45 wegen der Kurve aneinander stossen: alternativer Ort 47 für Verbindungsstelle). **Figur 9** zeigt eine seitliche Ansicht eines Stützkörpers 7 für eine Kurve mit dem um die Kurve verlaufenden Rollenkörper 5b. Achsen der Rollen 3 sind also nicht, wie beim gerade verlaufenden Rollenkörper 5a parallel zueinander, sondern sind in der Kurve im wesentlichen auf die Kurvenachse ausgerichtet. Die Rollenmittelpunkte verlaufen in einer gekrümmten Fläche.

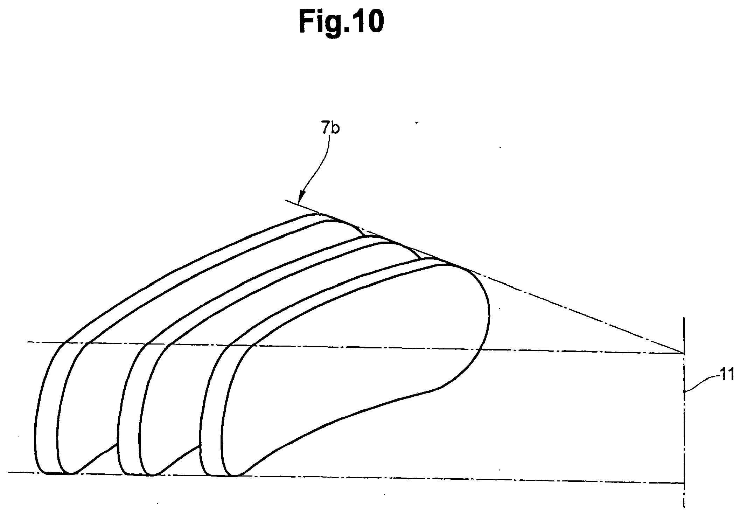

**Figur 10** zeigt mehrere konzentrische Stützkörper 7b für eine Kurve, der Klarheit wegen ohne Rollenkörper 5 und ohne Führungsnuten 71 und dergleichen. Die Stützkörper 7b bilden Umlaufbahnen, welche bezüglich der Kurvenachse 11 gebogen sind. Damit können im Wesentlichen beliebig breite Fördermittel 2 gestützt werden.

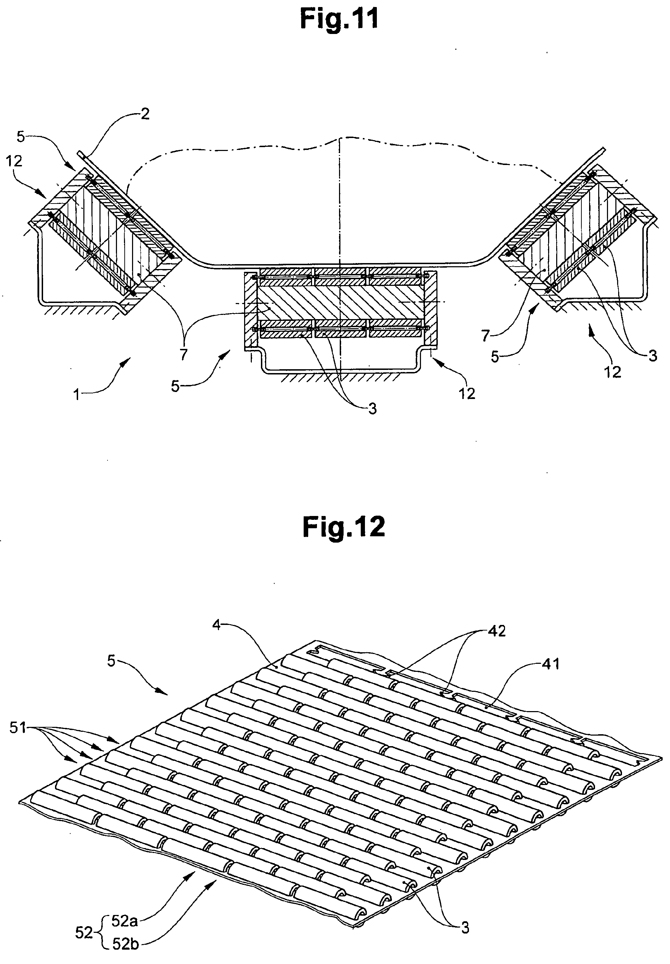

**Figur 11** zeigt einen Querschnitt durch eine Fördereinrichtung 1 mit seitlich angewinkelten Stützbereichen, jeweils mit eigenen Abstützvorrichtungen 12 mit Stützkörpern 7 und Rollenkörpern 5, zusätzlich zu einer Abstützvorrichtung 12 in einem horizontal gezeichneten Bodenbereich. Diese Anordnung ist besonders geeignet zur Abstützung von Förderbändern für Schüttgut.

**Figur 12** zeigt eine Variante eines Rollenkörpers 5 mit mehreren Reihen 51 von in Achsrichtung gegeneinander versetzten Rollen 3 (Ausschnitt). Der Rollenkörper 5 bildet einen beweglichen Rollenteppich, der um einen Stützkörper 7 umlaufen kann, oder auch auf einer Ebene, welche als Stützkörper 7 dient, abrollen kann. Auch in dieser Ausführungsform liegen mehrere Kolonnen 52 vor, wobei die Rollen einer ersten Kolonne 52a in Bewegungsrichtung voneinander beabstandet sind und jeweils teilweise zwischen Rollen einer anderen Kolonne 52b, welche seitlich (also in Achsrichtung) bezüglich der ersten Kolonne 52a verschoben, angeordnet sind.

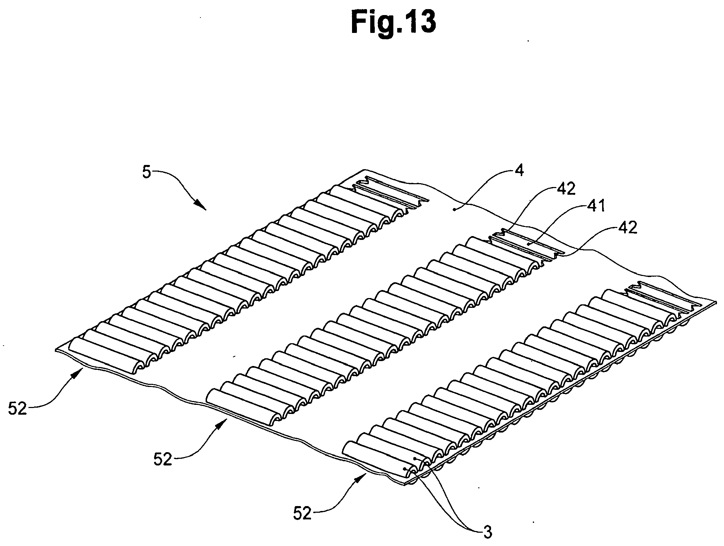

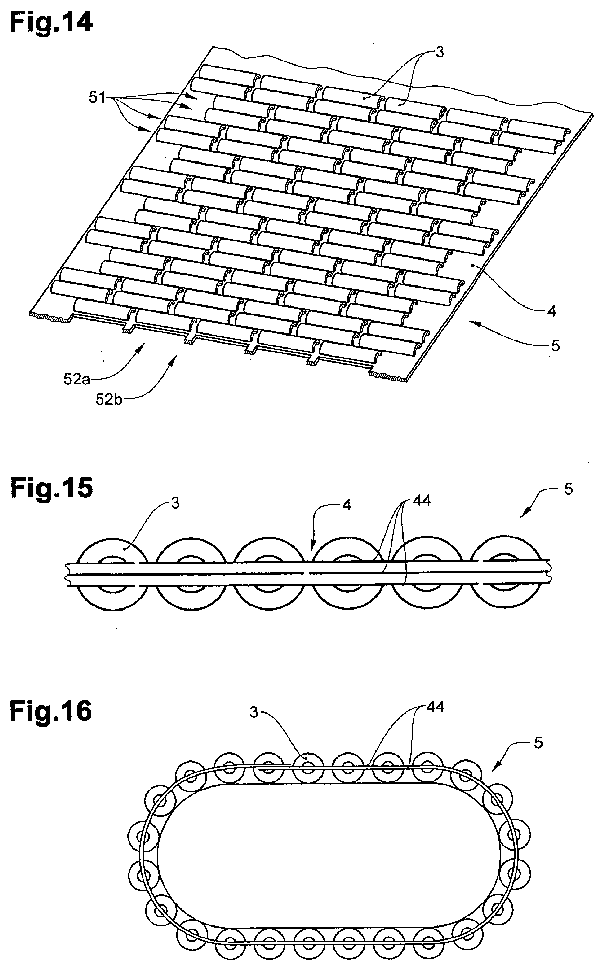

**Figur 13** zeigt eine weitere Variante eines Rollenkörpers 5, in welcher die Rollen 3 in mindestens zwei, beziehungsweise mehreren, parallel nebeneinander verlaufenden Kolonnen 52, nicht gegeneinander versetzt, verlaufen. In hinteren Reihen der Verbindungskörper 4 der **Figuren 12** und **13** sind jeweils Öffnungen 41 und Ausbuchtungen 42 zur besseren Veranschaulichung ohne eingesetzte Rollen 3 gezeigt. **Figur 14** zeigt eine weitere Variante eines Rollenkörpers 5, ähnlich wie Figur 12, jedoch mit jeweils paarweise nicht gegeneinander versetzten Reihen 51.

**Figur 15** zeigt einen Rollenkörper 5 mit einem Verbindungskörper 4 aus mehreren Schichten 44. Die einzelnen Schichten 44 sind in Längsrichtung des Verbindungskörpers gegeneinander versetzt. Es sind drei Schichten 44 gezeigt, es können aber auch nur zwei, oder vier oder mehr Schichten 44 vorliegen. Zur besseren Darstellen sind die Schichten 44 getrennt gezeichnet, in Wirklichkeit liegen sie lose aufeinander oder sind miteinander verbunden. Der gezeichnete Versatz zwischen zwei Schichten beträgt zwei Rollen 3, kann aber auch mehr betragen.

**Figur 16** zeigt einen Rollenkörper 5 mit einem Verbindungskörper 4 aus einem geschlauften Teil. Es ist also eine einzige Schicht 44 in einer Schlaufe geführt auf sich selber gelegt und bildet so einen mindestens zweischichtigen Verbindungskörper 4.

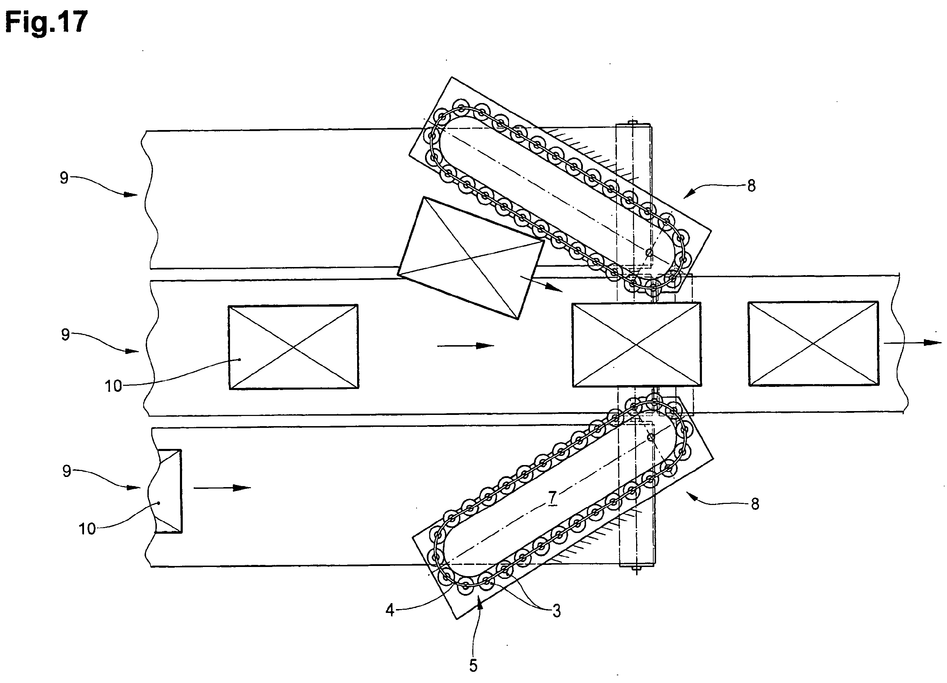

**Figur 17** zeigt eine Fördereinrichtung 1 mit seitlichen Führungselementen 8. Die Führungselemente 8 weisen Rollenkörper 5 und Stützkörper 7 auf, wobei die Umlaufbahnen der Rollenkörper 5 in einer im wesentlichen horizontalen oder geneigten Ebene liegen, um Fördergut 10 seitlich zu führen oder auszulenken. Optionale Bänder um die Gesamtheit der Rollen 3 herum, als Teil der Rollenkörper 5, sind hier nicht eingezeichnet. In der gezeigten Ausführungsform dient die Fördereinrichtung 1 zum Zusammenführen von mehreren, seitlich zueinander angeordneten Förderbahnen 9, respektive zum Zusammenführen von Fördergut 10, welches auf diesen Förderbahnen 9 transportiert wird. Eine insgesamt breitere Förderbahn wird also auf eine engere Förderbahn reduziert. Die einzelnen Förderbahnen 9 können unterschiedliche Fördergeschwindigkeiten aufweisen, und laufen dazu um einzeln drehbare Rollen um.

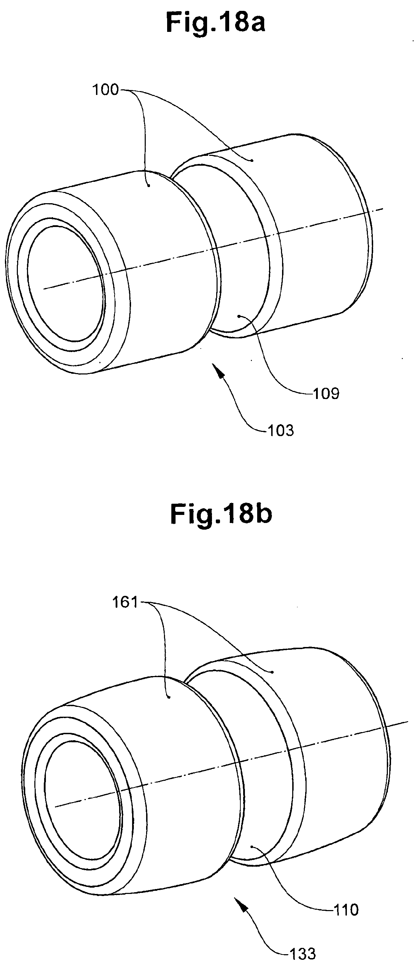

**Figur 18a** zeigt eine weitere Ausführungsform einer Rolle 103, welche hier zylinderförmig ausgebildet ist und eine mittig angeordnete, und vollständig umlaufende, ringförmige Umfangsnute 109 aufweist. D.h. die Nut ist konzentrisch zur Drehachse der Rolle angeordnet. Die Mantelfläche 100 der Rolle 103 ist abgesehen von der Nut 109 zylindrisch ausgebildet.

**Figur 18b** zeigt eine weitere Ausführungsform einer Rolle 133, welche sich von der Ausführungsform nach Figur 18a dadurch unterscheidet, dass die Mantelfläche 161 leicht bombiert ist. D.h. die Rolle 133 ist tonnenförmig ausgestaltet. Die konzentrischen, ringförmigen Umfangsnuten 109, 110 der beiden Ausführungsformen sind Führungsnuten, welche der Führung der Rollen 103, 133 entlang ihrer Umlaufbahn um den Stützkörper dienen. Dank der Nutenführung werden Querkräfte, also Axialkräfte, abgefangen, welche sonst auf die Halterung der Rollen am Verbindungskörper wirken.

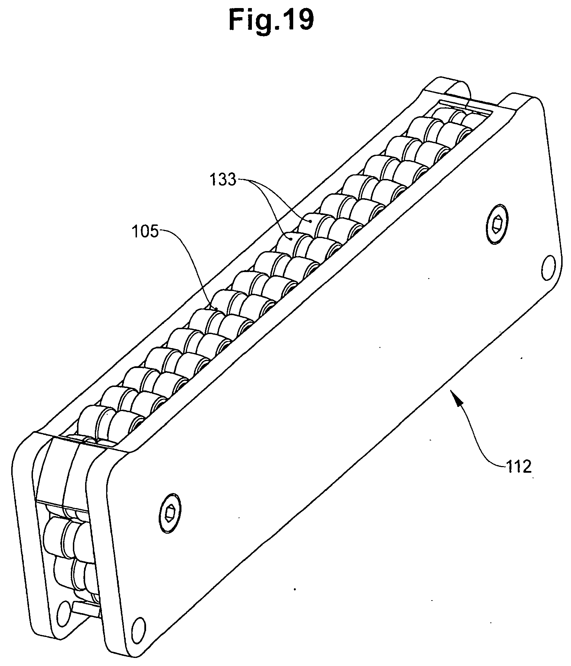

**Figur 19** zeigt eine Abstützvorrichtung 112 mit einem Rollenkörper 105 in einer perspektivischen Ansicht. Der Unterschied zu der in den Figur 4-6 gezeigten Abstützvorrichtung 12 liegt darin, dass der Rollenkörper 105 der hier gezeigten Abstützvorrichtung 112 mit Rollen 133 gemäss dem Ausführungsbeispiel nach Figur 18b bestückt ist.

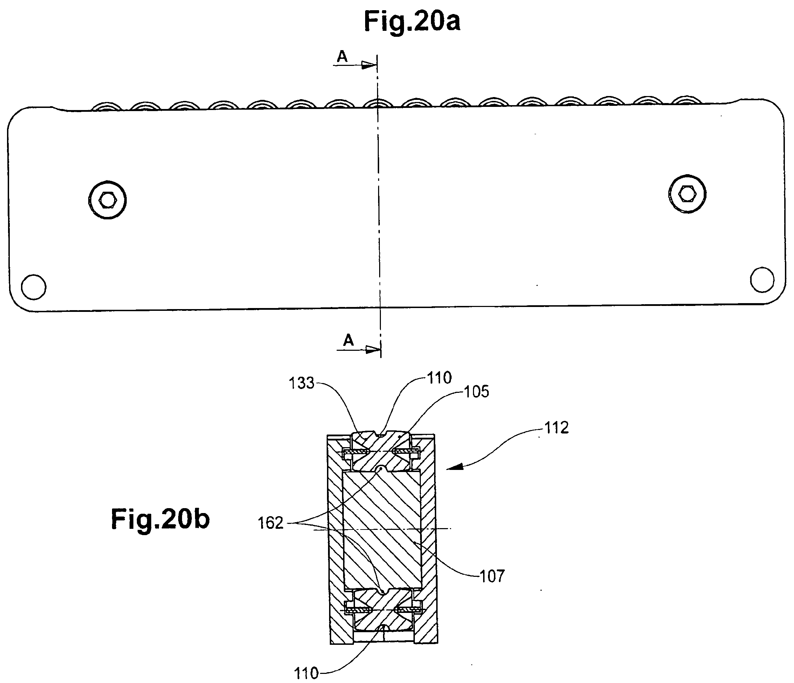

**Figur 20a** zeigt eine Seitenansicht einer Abstützvorrichtung 112 nach Figur 19.

**Figur 20b** zeigt einen Querschnitt durch die Abstützvorrichtung 112 gemäss Figur 20a entlang einer Linie A-A. Der Stützkörper 107 weist einen in Bewegungsrichtung der Rollen 133 umlaufenden Führungssteg 162 auf, welcher in die Führungsnuten der Rollen 133 eingreift. Die Form, insbesondere die Breite und Höhe des Führungssteges 162 ist entsprechend auf die Querschnittsabmessungen der Nut abgestimmt. D.h., die über die Führungsnut 110 geführte Rolle 133 weist wenig bis gar kein seitliches Spiel auf. Der Führungssteg 162 kann unterbruchlos oder mit Unterbrüchen ausgebildet sein. Die Rollen 133 werden über einen flächigen, flexiblen Verbindungskörper 104 gehalten und auf dem Stützkörper 107 geführt bzw. gelagert. Grundsätzlich kann die Nut-Steg-Führung auch umgekehrt ausgebildet sein.

Die zusätzliche Führungsuriterstützung durch die oben beschriebene Nut-Steg-Führung kommt bevorzugt bei bogenförmigen Führungsbahnen zum Einsatz, bei welchen die Rollenachsen aufeinander folgender Rollen nicht, wie beim gerade verlaufenden Führungsbahn, parallel zueinander sondern im wesentlichen auf eine Kurvenachse ausgerichtet sind. Solche bogenförmige Führungsbahnen sind z. B. in den Ausführungsbeispielen nach Figur 7 bis 10 dargestellt.

**BEZUGSZEICHENLISTE**

| | | | |
|---|---|---|---|
| 1 | Fördereinrichtung | 45 | Lager- bzw. Halterungsbereich |
| 2 | Fördermittel | 46 | Verbindungsstelle |
| 3 | Rolle | 47 | alternativer Ort für |
| 4 | Verbindungskörper | | Verbindungsstelle |
| 5 | Rollenkörper | 51 | Reihe |
| 6 | Band | 52 | Kolonne |
| 7 | Stützkörper | 71 | Führungsnut |
| 8 | Führungselement | 100 | Mantelfläche |
| 9 | Förderbahn | 103 | Rolle |
| 10 | Fördergut | 104 | Verbindungskörper |
| 11 | Kurvenachse | 105 | Rollenkörper |
| 12 | Abstützvorrichtung | 107 | Stützkörper |
| 21 | Umlenkrolle | 109 | Umfangsnut |
| 22 | Antrieb | 110 | Umfangsnut |
| 31 | Aussparung | 112 | Abstützvorrichtung |
| 41 | Öffnung | 133 | Rolle |
| 42 | Ausbuchtung | 161 | Mantelfläche |
| 44 | Schicht | 162 | Führungsgrat |

## Patentansprüche

1. **Fördereinrichtung** (1), aufweisend ein bewegtes, flächig ausgedehntes Fördermittel (2) zur Förderung von Schüttgut oder Stückgut, wie ruhendes Gut oder sich selbst bewegbares Gut, insbesondere Personen oder andere Lebewesen, oder zur Durchführung von Laufbewegungen von Personen oder Tieren, wobei unter dem Fördermittel (2) eine Abstützvorrichtung (12) angeordnet ist, welche einen Rollenkörper (5) mit einer Vielzahl von Rollen (3) aufweist, wobei der Rollenkörper auf einer Seite mit den Rollen (3) entlang einer nicht kreisförmigen Bahn am Stützkörper (7) abrollt und auf der anderen Seite das Fördermittel (2) stützt, indem die Rollen (3) am Fördermittel (2) selber oder an einem zwischen Fördermittel (2) und Rollen (3) mitlaufenden Band (6) abrollen, und wobei die Rollen (3) mit einem flexiblen Verbindungskörper (4) miteinander verbunden und voneinander beabstandet sind, **dadurch gekennzeichnet, dass** das Fördermittel (2) in einer Kurve um eine Kurvenachse, die im wesentlichen senkrecht zur Oberfläche des Fördermittels (2) liegt, verläuft, und das Fördermittel (2) im Bereich der Kurve abgestützt ist durch mindestens einen Rollenkörper (5) mit einem Verbindungskörper (4), welcher Verbindungskörper (4) um die Kurvenachse biegbar angeordnet ist und im Bereich der Kurve das Fördermittel (2), durch den am Stützkörper (7) abrollenden Rollenkörper (5) gestützt, sich um die Kurve bewegt.

2. Fördereinrichtung (1) gemäss Anspruch 1, wobei das Fördermittel (2) eine Mattenkette oder ein Band ist, und ein Unterstützungsbereich, in welchem das Fördermittel (2) durch den Rollenkörper (5) gestützt ist, plan ist.

3. Fördereinrichtung (1) gemäss Anspruch 2, wobei der Rollenkörper (5) sich im wesentlichen über die ganze Breite des Fördermittels (2) erstreckt.

4. Fördereinrichtung (1) gemäss einem der vorangehenden Ansprüche, wobei mehrere Rollenkörper (5) in Förderrichtung gesehen hintereinander und/oder nebeneinander zum Stützen des Fördermittels (2) angeordnet sind.

5. Fördereinrichtung (1) gemäss einem der vorangehenden Ansprüche, wobei der Rollenkörper (5) ein Band (6) aufweist, welches zwischen Rollen (3) und Fördermittel 2 verläuft, so dass das Fördermittel (2) durch das Band (6) gestützt ist.

6. Fördereinrichtung (1) gemäss Anspruch 1, wobei mehrere Rollenkörper (5) in einer konzentrischen Anordnung vorliegen, und die Umlaufbahnen der mehreren Rollenkörper (5) um die Kurvenachse gekrümmt sind.

7. Fördereinrichtung (1) gemäss einem der vorangehenden Ansprüche, wobei oberhalb des Fördermittels (2) mindestens ein Führungselement (8) mit einem Rollenkörper (5) zur seitlichen Führung und Umlenkung von Fördergut (10) angeordnet ist.

8. Fördereinrichtung (1) gemäss Anspruch 1, wobei die Rollen (3) keinen geschlossenen Kreislauf bilden, und das Fördermittel (2) zur Ausführung von hin- und hergehenden Bewegungen ausgebildet ist.

9. Fördereinrichtung (1) gemäss Anspruch 8, wobei das Fördermittel (2) eine flache Platte ist.

## Claims

1. A conveying apparatus (1) comprising a moving, planar conveying means (2) for conveying bulk material or individual entities, for example material or entities which is/are at rest or which can move of their own accord, in particular people or other living things, or for people or animals to walk or run on, wherein the conveying means (2) has arranged beneath it a supporting device (12), which comprises a roller body (5) with a multiplicity of rollers (3), wherein the roller body, on one side, has the rollers (3) rolling along a non-circular path on the supporting body (7) and, on the other side, supports the conveying means (2) by the rollers (3) rolling on the conveying means (2) itself or on a belt (6) which runs along between the conveying means (2) and rollers (3), and wherein the rollers (3) are connected to one another, and spaced apart from one another, by a flexible connecting body (4), **characterized in that** the conveying means (2) runs in a curve about a curve axis located essentially perpendicularly to the surface of the conveying means (2), and the conveying means (2) is supported in the region of the curve by at least one roller body (5) with a connecting body (4), which connecting body (4) is arranged in a flexible manner around the curve axis and, in the region of the curve, the conveying means (2), supported by the roller body (5) rolling on the supporting body (7), moves around the curve.

2. The conveying apparatus (1) as claimed in claim 1, wherein the conveying means (2) is a mat-top chain or a belt, and a supporting region, in which the conveying means (2) is supported by the roller body (5), is planar.

3. The conveying apparatus (1) as claimed in claim 2, wherein the roller body (5) extends essentially over the entire width of the conveying means (2).

4. The conveying apparatus (1) as claimed in one of the preceding claims, wherein a plurality of roller bodies (5) are arranged one beside the other and/or one behind the other, as seen in the conveying direction, supporting the conveying means (2).

5. The conveying apparatus (1) as claimed in one of the preceding claims, wherein the roller body (5) comprises a belt (6), which runs between the rollers (3) and conveying means (2), and therefore the conveying means (2) is supported by the belt (6).

6. The conveying apparatus (1) as claimed in claim 1, wherein a plurality of roller bodies (5) are present in a concentric arrangement, and the circulatory paths of the plurality of roller bodies (5) are curved around the curve axis.

7. The conveying apparatus (1) as claimed in one of the preceding claims, wherein the conveying means (2) has arranged above it at least one guide element (8) with a roller body (5) for the lateral guidance and deflection of conveying material (10).

8. The conveying apparatus (1) as claimed in claim 1, wherein the rollers (3) do not form a closed circuit, and the conveying means (2) is designed for executing back and forth movements.

9. The conveying apparatus (1) as claimed in claim 8, wherein the conveying means (2) is a flat plate.

## Revendications

1. Dispositif de transport (1) présentant un moyen de transport (2) mobile et aplati qui transporte des matières en vrac ou par pièces, par exemple un produit immobile ou un produit se déplaçant de lui-même, en particulier des personnes ou d'autres être vivants, ou pour exécuter des mouvements de marche par des personnes ou des animaux, dans lequel
un ensemble de soutien (12) qui présente un corps de roulement (5) doté de plusieurs rouleaux (3) est disposé en dessous du moyen de transport (2),
le corps de roulement roulant d'un côté sur le corps de soutien (7) par les rouleaux (3) le long d'une piste non circulaire et soutenant le moyen de transport (2) de l'autre côté par le fait que les rouleaux (3) roulent sur le moyen de transport (2) proprement dit ou sur une bande (6) qui se déplace conjointement entre le moyen de transport (2) et le rouleau (3),
les rouleaux étant reliés les uns aux autres et maintenus à distance mutuelle par un corps flexible de liaison (4),
**caractérisé en ce que**
le moyen de transport (2) s'étend suivant une courbe qui entoure un axe de courbe essentiellement perpendiculaire à la surface du moyen de transport (2),
**en ce que** le moyen de transport (2) est soutenu au niveau de la courbe par au moins un corps de roulement (5) qui présente un corps de liaison (4),
**en ce que** le corps de liaison (4) est disposé de manière à pouvoir fléchir autour de l'axe de la courbe et
**en ce que** le moyen de transport (2) se déplace autour de la courbe au niveau de la courbe en étant soutenu par le corps de roulement (5) qui roule sur le corps de soutien (7).

2. Dispositif de transport (1) selon la revendication 1, dans lequel le moyen de transport (2) est une chaîne à tapis ou une bande, en ce qu'une zone de soutien dans laquelle le moyen de transport (2) est soutenu par le corps de roulement (5) est plane.

3. Dispositif de transport (1) selon la revendication 2, dans lequel le corps de roulement (5) s'étend essentiellement sur toute la largeur du moyen de transport (2).

4. Dispositif de transport (1) selon l'une des revendications précédentes, dans lequel plusieurs corps de roulement (5) sont disposés les uns derrière les autres dans la direction de transport et/ou les uns à côté des autres pour soutenir le moyen de transport (2).

5. Dispositif de transport (1) selon l'une des revendications précédentes, dans lequel le corps de roulement (5) présente une bande (6) qui s'étend entre les rouleaux (3) et le moyen de transport (2) de telle sorte que le moyen de transport (2) est soutenu par la bande (6).

6. Dispositif de transport (1) selon la revendication 1, dans lequel plusieurs corps de roulement (5) sont disposés concentriquement, les pistes de déplacement des différents corps de roulement (5) étant courbées autour de l'axe de la courbe.

7. Dispositif de transport (1) selon l'une des revendications précédentes, dans lequel au moins un élément de guidage (8) présentant un corps de roulement (5) qui guide latéralement et qui renvoie le produit transporté (10) est disposé au-dessus du moyen de transport (2).

8. Dispositif de transport (1) selon la revendication 1, dans lequel les rouleaux (3) ne forment pas un circuit fermé et le moyen de transport (2) est configuré pour exécuter des déplacements en va et vient.

9. Dispositif de transport (1) selon la revendication 8, dans lequel le moyen de transport (2) est une plaque plane.
